# EUROPEAN PATENT APPLICATION

(11) **EP 1 763 231 A2**
(43) Date of publication of application: **14.03.2007**
(21) Application number: 06018968.5
(22) Date of filing: 11.09.2006
(51) Int. Cl.: H04N 5/44

(54) **Plasma display apparatus**

(30) Priority: 12.09.2005 KR 20050084830
(71) Applicant: LG Electronics Inc., Yongdungpo-Gu Seoul 150-010 (KR)
(72) Inventor: Kong, Jun Hee, Gumi-si Kyungsangbuk-do 730-789 (KR)
(74) Representative: Katérle, Axel

(57) **Abstract**

The present invention relates to a plasma display apparatus comprising a panel; one or more drivers applying a driving voltage to a plurality of electrodes formed in the panel; and a control board supplying a control signal to the one or more drivers, wherein the control board includes an image signal processor which performs the digital conversion of a analog image signal inputted from the outside and a decoding. As at least one of the image signal processor which performs a decoding is integrated, the signal lines connected to the control board can be simply implemented such that the assembly production efficiency increases as well as the noise reduction in the signal transmission.

## Description

### BACKGROUND OF THE INVENTION

### Field of the Invention

The present invention relates to a plasma display apparatus, in particular, to a plasma display panel apparatus in which an image signal processor or/and a tuner is collectively implemented in a controller controlling the timing at one or more drivers.

### Description of the Conventional Art

Fig. 1 is a drawing illustrating the panel structure according to the present invention.

Fig. 2 is a drawing illustrating the panel and the driver according to the present invention.

Fig. 3 illustrates a signal waveform for panel driving according to the present invention.

Fig. 4 is a block diagram of configuration of an integration control board according to the present invention.

Fig. 5, Fig. 6 are a rear view of the display device in which an integration control board according to the present invention is mounted.

### SUMMARY OF THE INVENTION

Accordingly, an object of the present invention is to solve at least the problems and disadvantages of the background art.

A plasma display apparatus according to the present invention comprises a panel; one or more drivers applying a driving voltage to a plurality of electrodes formed in the panel; and a control board supplying a control signal to the one or more drivers, wherein the control board includes an image signal processor which performs the digital conversion of a analog image signal inputted from the outside and a decoding.

In accordance with the present invention, one or more external input terminals in which an image signal is inputted from a broadcast cable or an external device are formed on the control board, while an additional signal line connecting the external terminal and the control board can be omittted.

The control board comprises a tuner selecting a broadcast signal inputted from the outside according to a selected channel information. The tuner comprises at least one of an analog tuner which receives an analog broadcasting signal and a digital tuner which receives a digital broadcasting signal, while it can be used for both analog and digital.

One or more external input terminals can be directly connected to the control board, while it can be separately formed in the outer surface of the case, which is connected to the control board through a signal line.

The control board comprises an inverse gamma compensation part performing a reverse gamma compensation for an image signal converted into a digital format; a gain controller performing a gain value control for gray level adjustment of the image signal; and a controller controlling a driving signal supplied to the panel during a subfield to perform a subfield mapping according to the adjusted gray level. In addition, an image signal processor processing a signal inputted from the external is integrated on one board such that the wiring can be simplified.

### BRIEF DESCRIPTION OF THE DRAWINGS

The invention will be described in detail with reference to the following drawings in which like numerals refer to like elements. The accompany drawings, which are included to provide a further understanding of the invention and are incorporated in and constitute a part of this specification, illustrate embodiments of the invention and together with the description serve to explain the principles of the invention. In the drawings:

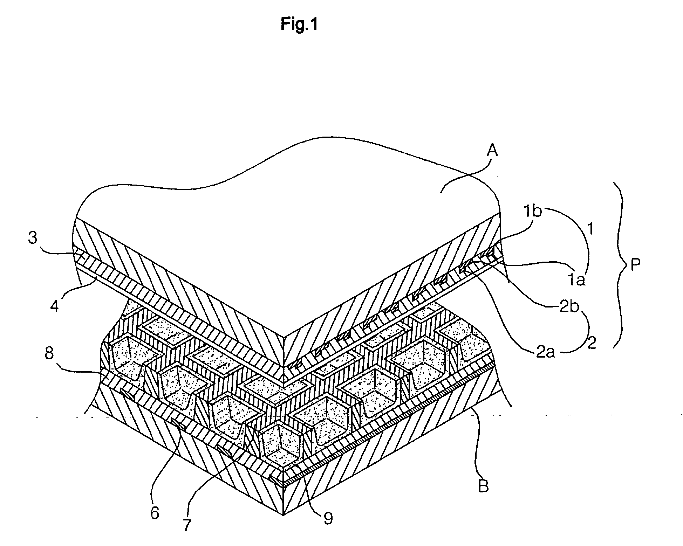

Fig. 1 is a drawing illustrating the panel structure according to the present invention.

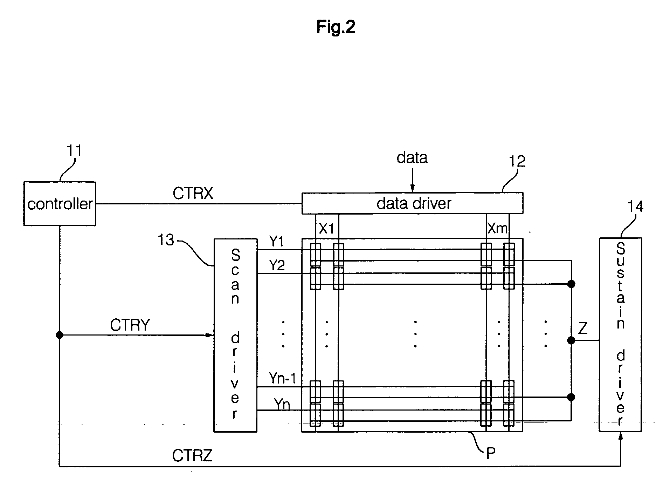

Fig. 2 is a drawing illustrating the panel and the driver according to the present invention.

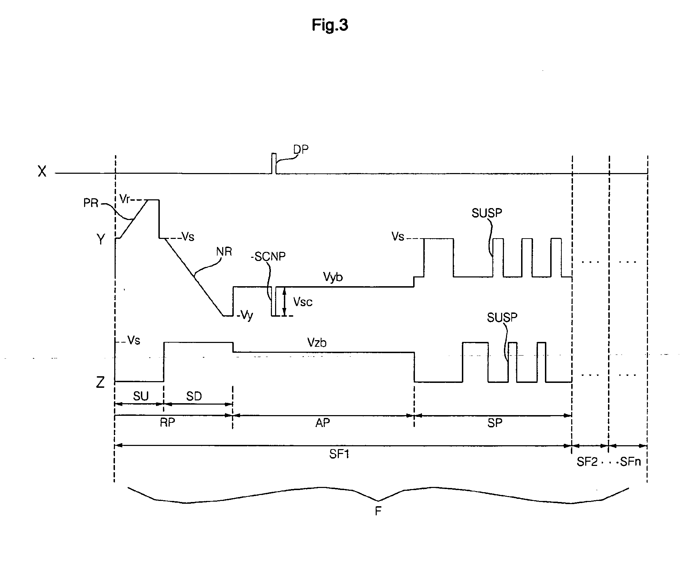

Fig. 3 illustrates a signal waveform for panel driving according to the present invention.

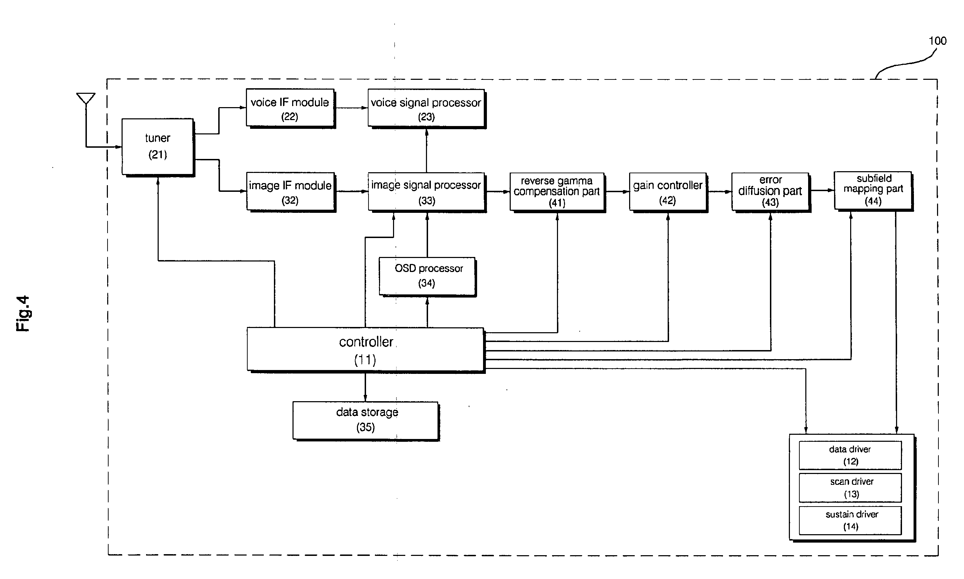

Fig. 4 is a block diagram of configuration of an integration control board according to the present invention.

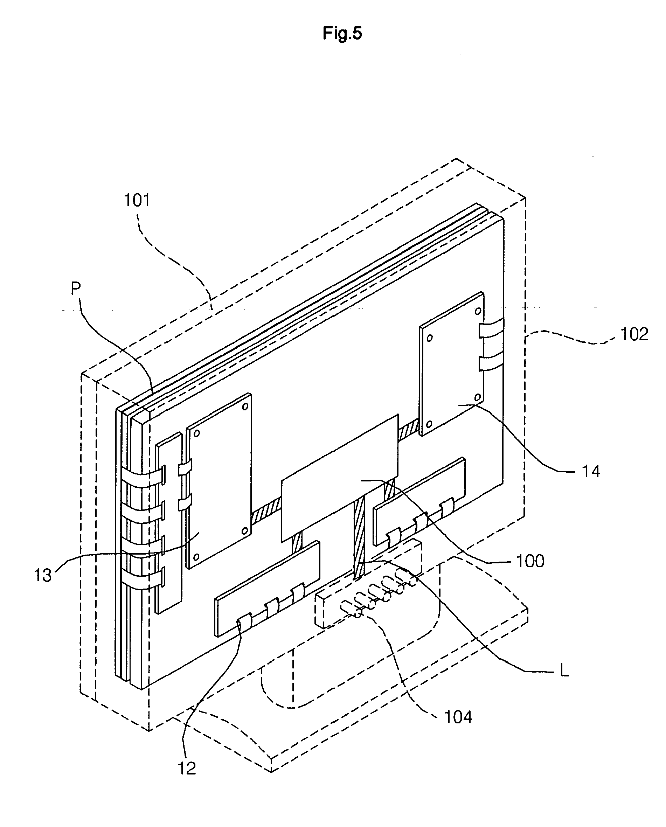

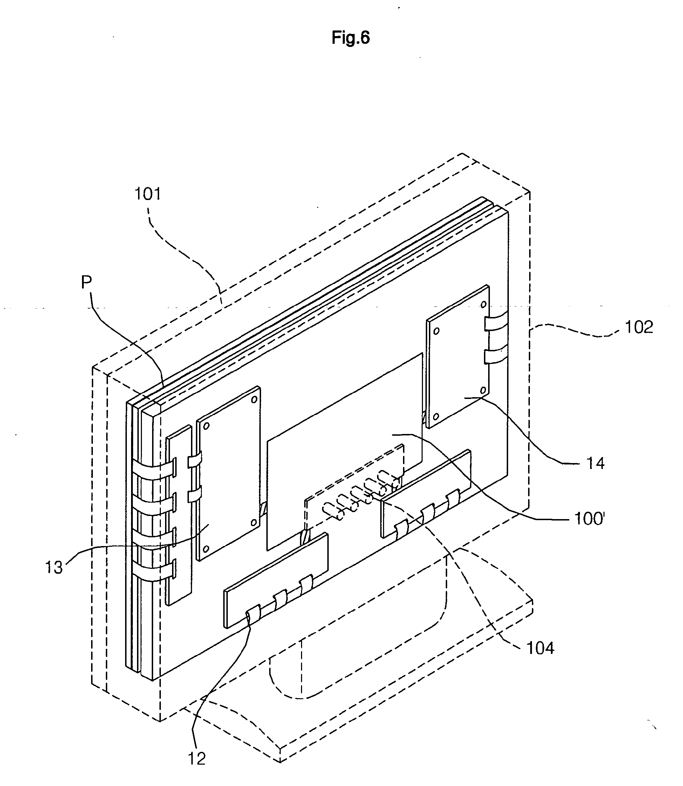

Fig. 5, Fig. 6 are a rear view of the display device in which an integration control board according to the present invention is mounted.

### DETAILED DESCRIPTION OF PREFERRED EMBODIMENTS

Hereinafter, the embodiment of the present invention will be illustrated in detail with reference to Fig. 1 through Fig. 6.

Fig. 1 is a drawing for illustrating the panel P structure according to the present invention. The panel is formed by coalescing the front substrate A and the rear substrate B.

The scan electrode 1 and the sustain electrode 2 are formed in the front substrate A, while the address electrode 6 is formed in the rear substrate B. The scan electrode and the sustain electrode are crossed with the address electrode 6 in a cell.

The scan electrode 1 and the sustain electrode 2 is comprised of a transparent electrode 1b, 2b and a bus electrode 1a, 2a. The transparent electrode is made of a trace amount of tin oxide and indium oxide called ITO(Indium Tin Oxide). Thus, the transmittance ratio is high and the light generated in the inside of the cell can be emitted to outside. Further, bus electrode 1a, 2a is provided to lower the surface resistance of the transparent electrode.

On the scan electrode 1 and the sustain electrode 2, a dielectric layer 3 is formed, further, the protective film 4 for protecting the dielectric layer 3 also can be formed.

The dielectric layer 8 is formed on the address electrode 6. On the dielectric layer 8, a barrier rib 7 that barrier ribs the discharge cell in the widthwise/lengthwise direction, and R, G, B fluorescent substance 9 coated on the dielectric layer 8 and the barrier rib 7 are formed.

The structure of the plasma display panel according to the present invention is not restricted in Fig. 1.

For example, the scan electrode 1 and the sustain electrode 2 does not include the transparent electrode 1b, 2b made of ITO, while it may be the ITO-less structure that includes only bus electrode 1a, 2a. Further, although not shown, it may be an integrated BM structure in which a black matrix BM is formed in the front substrate A as an integrated type.

Furthermore, the scan electrode 1 and the sustain electrode 2 can include 2 or more electrode lines, may include the other electrode.

The structure of the barrier rib formed on the rear substrate B illustrates a close type that is a structure which closes the discharge cell shown in Fig. 1. But it is not restricted in such type, but it can be a stripe type that is a structure in which the barrier rib in a specific direction is omitted, or can be a fish bone type that is a structure in which a protrusion is formed along the column barrier rib 7 with a predetermined interval.

Fig. 2 is a drawing illustrating a data driver 12, a scan driver 13 and a sustain driver 14 which applies a driving signal to the electrode formed in the panel P.

Referring Fig. 2, a data driver 12 for supplying data to the address electrode X1 to Xm formed in the panel, a scan driver 13 for driving the scan electrode Y1 to Yn, a sustain driver 14 for driving the sustain electrode Z, and a controller 11 for controlling the switch timing at each driver 12, 13, 14 are provided.

The data driver 12 supplies data pulse for the selection of on cell and off-cell to the address electrode X1 to Xm.

In Fig. 2, the single scan method was exemplified with the address electrode X1 to Xm which was not divided. But it is not restricted in such a method. That is, the dual scan method in which the address electrode of the present invention is divided into 2 or more parts and the driving signal is applied to a first scan electrode line Y1 to Ym and a second scan electrode line the Yn-m to Yn which intersect with each divided address electrode group may be applicable.

Furthermore, the address electrode X1 to Xm may be divided into the odd-number address electrode group X1, X3,..., Xm-1 and the even number address electrode group X2, X4,.., Xm to provide 2 or more data drivers which applies the driving signal to each group.

Under the control of the controller 11, the scan driver 13 supplies a set up signal PR which gradually rises and a set-down signal NR which gradually falls in a reset period RP, sequentially supplying a scan pulse to the scan electrode Y1 to Yn to select the scan line to which data is supplied in the address period AP, supplying a sustain pulse during the sustain period SP so that a discharge be maintained in selected on cell.

The sustain driver 14 alternately operates with the scan driver 13 during sustain period SP and supplies the sustain pulse to the sustain electrode.

The controller 11 receives a vertical/horizontal synchronous signal and a clock signal to generate timing control signals CTRX, CTRY, CTRZ which are necessary for each driver 12, 13, 14, supplying the timing control signal CTRX, CTRY, CTRZ to the corresponding driver to control the driver.

The signal waveform supplied by each driver 12, 13, 14 during one subfield is explained with reference to Fig. 3.

The reset period RP is a period when a set up signal and a set-down signal is applied to initialize the discharge cell of the full screen. The address period AP is a period when a scan pulse is applied to the scan electrode for the selection of discharge cell and, at the same time, when a data pulse is applied to the address electrode. The sustain period SP is a period when a sustain pulse is an alternately applied to the scan electrode and the sustain electrode so that a discharge may be maintained in the selected discharge cell.

In the set-up period SU of the reset period RP, the set up signal PR rising to the reset voltage Vr is applied to all scan electrodes Ys, while the wall charge is gradually accumulated in the inside as the set up discharge is generated by the set up signal PR. Moreover, in the set-down period SD, the set-down signal NR falling to the erase voltage of the negative polarity is applied to the scan electrode so that unnecessary excessive wall charges for address discharge are erased in the discharge cell. Simultaneously, the voltage of the positive polarity is applied to the sustain electrode Z.

In the address period AP, the scan pulse - SCNP of the negative polarity falling from the scan bias voltage Vyb to the scan voltage - Vy of the negative polarity is sequentially applied to the scan electrode, simultaneously, the data pulse DP of the positive polarity is applied to the address electrode X. At this time, the bias voltage of the positive polarity is supplied to the sustain electrode Z.

Therefore, the address discharge is generated due to the voltage difference of the scan pulse - SCNP and the data pulse DP with the address period AP to select the discharge cell.

Thereafter, in the sustain period SP, the sustain pulse SUSP having the sustain voltage Vs of the positive polarity is alternately applied to the scan electrode Y and the sustain electrode Z. Thus, the sustain discharge is generated to emit light. That is, as the sustain pulse SUSP supplied during the sustain period SP increases, the luminous output is increased and a luminance is enhanced.

In the meantime, the drive waveform according to the embodiment of the present invention is not restricted in the waveform shown in Fig. 3, but the waveform can be variously implemented.

For example, the reset period RP can be omitted in at least one subfield among a plurality of subfields forming a frame. The reset period may only exist in the first subfield.

Further, in Fig. 3, it is illustrated that the starting voltage of the set up signal and the starting voltage of the set-down signal are the voltage level which is substantially identical. However, the setup starting voltage level can be higher than the set down starting voltage level. On the contrary, the setup starting voltage level can be lower.

In the meantime, the set up signal or the set-down signal that is a waveform which gradually rises or falls has a two or more slopes and may rises or falls stepwise.

In at least one subfield among a plurality of subfields forming a frame, a pre-reset period may exist before the reset period to support to form enough wall charges.

For example, while a signal in which the voltage value is gradually decreased is applied to the scan electrode during the pre-reset period, the voltage of the positive polarity is applied to the sustain electrode to prevent the reset discharge in advance. However, it is preferable that the pre-reset period exists in the first subfield in consideration of the drive margin.

Moreover, after the sustain period of a subfield is terminated, the erase pulse which makes the wall charge state in the discharge cell to be uniform before the start of the reset period of the next subfield can be additionally applied.

In the meantime, except the waveform shown in Fig. 3, the other signal which can generate a sustain discharge during the sustain period can be applied.

In conclusion, the sustain discharge is performed when the voltage difference between the scan electrode and the sustain electrode exceeds the firing voltage. Therefore, the half sustain voltage Vs/2 and the half sustain voltage of the negative polarity -Vs/2 as well as the sustain voltage Vs and the ground voltage 0 V can be applied to each electrode. Further, the sustain voltage of the positive polarity Vs may be applied in only one electrode, sequentially, the sustain voltage of the negative polarity - Vs can be applied to the other electrode.

In this way, one subfield SF is comprised of the reset period RP, the address period AP, and the sustain period SP. The light accumulated during one frame is acknowleged by performing a cell selection and a gray scale display during each subfield.

In this way, each driver 12, 13, 14 of the plasma display apparatus displays a gray scale according to the image signal which is inputted from the outside by supplying the driving signal shown in Fig. 3 during one subfield.

The image signal which is inputted from the outside is an image signal inputted from an external device including DVD, and a notebook computer or a broadcast signal inputted from an antenna, and a wire cable. Such image signals pass through an integration control board 100 of the present invention before being inputted to each driver 12, 13, 14, which is shown in Fig. 4.

The integration control board of the present invention is implemented by integrating a conventional signal processing board and control board on one board. The configuration of the integration control board will be described with reference to Fig. 4.

A tuner 21 selects the designated channel based on seeking data for the designated channel. At this time, the tuner can be an analogue tuner receiving an analog broadcasting signal, a digital tuner receiving a digital broadcasting signal, and a digital/analog tuner which can select the channel of the corresponding broadcast mode according to the tuning control signal from controller among the analog broadcasting signal or the digital broadcasting signal.

The tuner 21 is internally connected to the broadcast signal input terminal in which broadcast signal is inputted among the interface terminal 104. Therefore, the conventional tuner is implemented in the signal processing board, however, in the present invention, it is collectively implemented in the control board 100 supplying the panel drive signal. Therefore, the interface terminal 104 in which one or more broadcast input terminal are equipped is directly connected to the control board 100.

An OSD processor 34 generates a character information for displaying a TV function control mode and a function control regulation value performed in the mode.

In the meantime, in case a data storage 35 selects the channel of the broadcast signal, seeking data of the channel for selection is stored. Simultaneously, the standard value including a signal sharpness, a luminance, a color density, and a shading which are an adjusting object of color level in manufacturing the television is stored.

A voice IF module 22 performs the intermediate frequency amplification of the voice signal of the broadcast signal selected by the tuner 21 and detection. The voice signal processor 23 performs a voice surround or a voice multiplex processing for the voice signal which is intermediate frequency amplified and detected by the voice IF module.

The image IF module 32 performs the intermediate frequency amplification of the image signal of the broadcast signal selected by the tuner 21 and detection. The image signal processor 33 in which CHROMA IC is built performs the regenerative process for the display of the image signal which is intermediate frequency amplified and detected.

Since the voice signal processor 23 and the image signal processor 33 processes the voice signal or the image signal inputted from the external device such as notebook computer, PMP, camcorder, DVD player connected to the interface terminal 104 as well as the broadcast signal delivered from the tuner 21, they are internally connected with at least one external input terminal among interface terminal.

That is, after the voice signal processor 23 and the image signal processor 33 converts the analog IF signal into the digital format, they perform equalizing and channel decoding to remove noise, separate image data and voice data which are multiplexed in the decoded broadcast signal. In addition, according to the resolution HD class, SD class implemented in the panel module, the scaling of image data is performed.

Conventional image signal processor was implemented in the signal processing board. However, in the present invention, it is collectively implemented in the control board 100 supplying signals for panel driving. Therefore, the interface terminal 104 in which at least one input terminal is equipped is directly connected to the control board.

In the image signal processor 33, the image data transformed to digital data is compensated through an inverse gamma compensation part 41, a gain control part 42, an error diffusion part 43, and a subfield mapping part 45. The inverse gamma compensation part 41 converts the luminance value resulting from the gray level of the image signal inputted by performing a reverse gamma compensation for R/G/B image data which is transformed into a digital data in the image signal processor.

The gain control part 42 controls the gain value of data compensated in the reverse gamma compensation part to control the gray level. That is, in case the image pattern in which a load within the permitted range is loaded is inputted, the gray level outputted in the reverse gamma compensation part 41 is maintained.

In case an abnormal image pattern in which a load exceeding the permitted range is loaded is detected, the gain value is adjusted so that the level be less than the gray level outputted in the reverse gamma compensation part.

The sustain pulse number is calculated to be delivered to the scan driver 13 and the sustain driver 14 according to the gray level which is maintained or compensated as described. On the other hand, mapping data are calculated so that the subfield mapping be made according to the gray level.

The mapping data include a decimal number, while the error diffusion part 43 diffuses the quantization error which is generated in converting the mapping data into the integer value to the adjacent cell.

The subfield mapping part 44 performs the subfield mapping corresponding to the mapping data. Each driver 12, 13, 14 connected to the panel electrode generates and supplies the driving signal based on the compensated image data as described.

That is, the integration control board 100 of the present invention processes the voice signal which is inputted from the outside to output it with a speaker equipped in the display device, processing the image signal which is inputted from the outside, driving each driver to process the voice/image signal so as to output it through the panel.

Although not shown, in addition, in the integration control board 100 of the present invention, an additional function unit which is the necessary until the image signal inputted from the outside is displayed through the panel can be more included.

The plasma display apparatus in which the integration control board 100 is equipped will be described with reference to Fig. 5. As the tuner 21 in which the broadcast signal is inputted and the image signal processor 33 transforming the analog image signal which is inputted from the outside into the digital image signal are integrated on the control board 100, it is characterized that the interface terminal 104 is directly connected to the control board 100 of the present invention. It is a first embodiment.

Based on a heat dissipation frame manufactured with a material having high thermal conductance such as aluminium, the panel P in which the front substrate and the rear substrate are coalesced is mounted on a front side, while one or more drivers 12, 13, 14 for applying the driving voltage to a multiple electrode formed in the panel are mounted on a rear side.

The front case 101 is located on the front side of the panel, while the rear case 102 is located on the rear side of the driver. The set of the plasma display apparatus is made as the front/rear case is combined.

In the rear side or the side of the device set, the interface terminal 104 in which one or more terminal are equipped is formed. Among them, the broadcast signal input terminal in which the broadcast signal is inputted, and the external input/output terminal in which the image/ voice signal is input/output from the external device are equipped.

As a kind of terminal, there are S - Image, RGB, DVI terminal, D-SUB terminal, a voice terminal. It is expressed as dotted line since it is exposed outside.

The interface terminal 104 is separately formed with the control board 100, being able to be connected to the control board through the signal line L in the case. It is identical with the drawing shown in Fig. 5.

In addition, the interface terminal part 104 of the present invention can be directly formed on the integration control board 100'. That is, only the surface where the interface terminal is formed is exposed outside as indicated by the dotted line, the other board surface is covered with the rear case 102. Therefore, the signal line connecting the interface terminal 104 and the control board 100' can be omitted, the signaling distance is shortened. It is shown in Fig. 6.

At this time, a chip corresponding to the configuration block shown in Fig. 4 can be mounted on the integration control board 100, 100' shown in Fig. 5 and Fig. 6. That is, the conventional signal processing board and control board are integrated. Therefore, the space which the conventional signal processing board occupied can be available and the circuit design is facilitated. The signal line between the signal processing board and the control board can be omitted to make the wiring structure to be simple.

Further, the integration control board of the present invention can have a chip corresponding to the tuner and the image signal processor which are in the conventional signal processing board. Therefore, the conventional signal line between the tuner and the control board, and the signal line between the image signal processor and the control board can be omitted. The interface terminal is directly connected to the integration control board to make the wiring structure to be simple.

Furthermore, the integration control board of the present invention can have a chip corresponding to the tuner in the conventional signal processing board. Therefore, the signal line, in the conventional invention, between the tuner and the control board can be omitted, while the broadcast input terminal is directly connected to the integration control board among the interface terminal.

Further, the integration control board of the present invention can have a chip corresponding to the image signal processor which is in the conventional signal processing board. Therefore, the conventional signal line between the image signal processor and the control board can be omitted. The external input terminal among the interface terminal is directly connected to the integration control board.

In conclusion, the integration control board 100, 100' of the present invention, being connected to the scan/sustain/data driver, performs the generation and the supplying of control signal according to the image signal for implementing. Simultaneously, as at least one of the tuner which performs a broadcast tuning function of the conventional signal processing board and/or the image signal processor which performs a digital conversion processing and a scaling is collectively implemented, the wiring structure with the interface terminal 104 can be simplified. Therefore, the production process can be simple to attain the cost down.

Further, as the interface terminal is directly formed on the control board, without the signal line, the broadcast signal or the image/voice signal from the external device can be directly inputted to improve a noise-problem which can be generated in signal transmitting.

In this case, it is clarified that the integration control board of the present invention and the signal line connection structure thereof can be applied to all image displays in which the external input/output terminal is equipped as well as the plasma display apparatus.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A plasma display apparatus comprising:
a panel;
one or more drivers applying a driving voltage to a plurality of electrodes formed in the panel; and
a control board supplying a control signal to the one or more drivers,
wherein the control board includes an image signal processor which performs the digital conversion of a analog image signal inputted from the outside and a decoding.

2. The apparatus of claim 1, wherein one or more external input terminals in which an image signal is inputted from a broadcast cable or an external device are formed on the control board.

3. The apparatus of claim 1, wherein one or more external output terminals in which an image signal is onputted to a connected external device are formed on the control board.

4. The apparatus of claim 1, wherein the control board comprises a tuner selecting a broadcast signal inputted from the outside according to a selected channel information.

5. The apparatus of claim 4, wherein the tuner comprises at least one of an analog tuner which receives an analog broadcasting signal and a digital tuner which receives a digital broadcasting signal

6. The apparatus of claim 4, wherein the tuner is a digital /analog tuner which receives one of an analog broadcasting signal and a digital broadcasting signal.

7. The apparatus of claim 1, wherein an interface terminal including one or more external input terminals in which an image signal is inputted from a broadcast cable or an external device is formed in the outer apparatus,
wherein the interface terminal is connected to the control board through a signal line.

8. The apparatus of claim 1, wherein an interface terminal including one or more external output terminals in which an image signal is outputted to an connected external device is formed in the outer surface of the apparatus,
wherein the interface terminal is connected to the control board through a signal line.

9. The apparatus of claim 1, wherein the control board comprises:
an inverse gamma compensation part performing a reverse gamma compensation for an image signal converted into a digital format;
a gain controller performing a gain value control for gray level adjustment of the image signal; and
a controller controlling a driving signal supplied to the panel during a subfield to perform a subfield mapping according to the adjusted gray level.

10. A plasma display apparatus comprising:
a panel;
one or more drivers applying a driving voltage to a plurality of electrodes formed in the panel; and
a control board supplying a control signal to the one or more drivers,
wherein the control board includes an image signal processor which performs the digital conversion of a analog image signal inputted from the outside and a decoding, while one or more external input terminals in which an image signal is inputted from a broadcast cable or an external device are formed on the control board.

11. The apparatus of claim 10, wherein one or more external output terminals in which an image signal is onputted to a connected external device are formed on the control board.

12. The apparatus of claim 10, wherein the control board comprises a tuner selecting a broadcast signal inputted through the external input terminal.

13. The apparatus of claim 12, wherein the tuner comprises at least one of an analog tuner which receives an analog broadcasting signal and a digital tuner which receives a digital broadcasting signal.

14. The apparatus of claim 12, wherein the tuner is a digital/analog tuner which receives one of an analog broadcasting signal and a digital broadcasting signal.

15. The apparatus of claim 10, wherein the control board comprises:
an inverse gamma compensation part performing a reverse gamma compensation for an image signal converted into a digital format;
a gain controller performing a gain value control for gray level adjustment of the image signal; and
a controller controlling a driving signal supplied to the panel during a subfield to perform a subfield mapping according to the adjusted gray level.

16. The apparatus of claim 10, wherein the image signal processor is formed as one chip to be mounted on the control board.

17. The apparatus of claim 12, wherein the image signal processor and the tuner are formed as one chip to be mounted on the control board.
